# EUROPÄISCHE PATENTSCHRIFT

(11) **EP 3 220 617 B1**
(45) Veröffentlichungstag und Bekanntmachung des Hinweises auf die Patenterteilung: **09.01.2019**
(21) Anmeldenummer: 17160809.4
(22) Anmeldetag: 14.03.2017
(51) Int. Cl.: H04M 11/02, H04N 7/18, G08B 15/00

(54) **TÜRKOMMUNIKATIONSSYSTEM, AUSSENGERÄT FÜR EIN TÜRKOMMUNIKATIONSSYSTEM UND VERFAHREN ZUM BETRIEB EINES TÜRKOMMUNIKATIONSSYSTEMS**
DOOR COMMUNICATION SYSTEM, OUTSIDE DEVICE FOR A DOOR COMMUNICATION SYSTEM AND METHOD FOR OPERATING A DOOR COMMUNICATION SYSTEM
SYSTÈME DE COMMUNICATION DE PORTE, APPAREIL EXTERNE POUR UN SYSTÈME DE COMMUNICATION DE PORTE ET PROCÉDÉ DE FONCTIONNEMENT D'UN SYSTÈME DE COMMUNICATION DE PORTE

(30) Priorität: 14.03.2016 DE 102016204167
(43) Veröffentlichungstag der Anmeldung: 20.09.2017
(73) Patentinhaber: Idencom Germany GmbH, 10627 Berlin (DE)
(72) Erfinder: ZENG, Qiuping, 10557 Berlin (DE)
(74) Vertreter: Maikowski & Ninnemann Patentanwälte Partnerschaft mbB

(56) Entgegenhaltungen:
- US-A1- 2012 001 755
- US-B1- 9 253 455
- "Building the home of the future - today;HFDH_14 Laurent_Nicq_ConvergeX", ETSI DRAFT; HFDH_14 LAURENT_NICQ_CONVERGEX, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. HF - Open, 22. Oktober 2004 (2004-10-22), Seiten 1-19, XP014211251, [gefunden am 2004-10-22]
- DIDIER DONSEZ ET AL: "A Multi-Protocol Service-Oriented Platform for Home Control Applications", CONSUMER COMMUNICATIONS AND NETWORKING CONFERENCE, 2007. CCNC 2007. 20 07 4TH IEEE, IEEE, PI, 1. Januar 2007 (2007-01-01), Seiten 1174-1175, XP031087970, ISBN: 978-1-4244-0667-8

## Beschreibung

Die vorliegende Erfindung betrifft ein Türkommunikationssystem nach dem Oberbegriff des Anspruchs 1, ein Außengerät für ein solches Türkommunikationssystem sowie ein Verfahren zum Betrieb eines Türkommunikationssystems.

Türkommunikationssysteme werden häufig für die Kommunikation zwischen einer in einem Außenbereich eines Bauwerks befindlichen Person und einer in einem Innenbereich des Bauwerks befindlichen Person eingesetzt, wobei der Außenbereich von dem Innenbereich durch eine Tür abtrennbar ist. Beispielsweise kann ein herkömmliches Türkommunikationssystem eine Gegensprechanlage umfassen, mittels derer ein Bewohner von dem Innenbereich aus mit einem in dem Außenbereich befindlichen Besucher kommunizieren kann, bevor der Bewohner dem Besucher gegebenenfalls durch Öffnen der Tür den Zutritt zu dem Innenbereich gewährt.

Derartige Türkommunikationssysteme weisen üblicherweise wenigstens ein Außengerät, welches zur ortsfesten Anordnung in dem Außenbereich vorgesehen ist, und wenigstens ein von dem Außengerät räumlich separates Innengerät auf. Dabei ist das Innengerät über eine Kommunikationsverbindung mit dem Außengerät verbindbar. Bei herkömmlichen Türkommunikationssystemen ist das Innengerät häufig ortsfest in dem Innenbereich angeordnet und mit dem Außengerät, beispielsweise über Zwei- oder Vierdrahttechnik, verkabelt, so dass für die Kommunikation eine kabelgebundene Kommunikationsverbindung hergestellt werden kann.

Im Stand der Technik sind ferner Türkommunikationssysteme bekannt, bei welchen Daten wenigstens streckenweise drahtlos übertragen werden. So beschreibt die DE 20 2012 012 542 U1 eine Türsprechanlage mit einer Türstation, die zusammen mit einem Server-Computer und einer WLAN-Basisstation in einem Netzwerk installiert ist. Dabei ist die WLAN-Basisstation über eine drahtlose WLAN-Verbindung mit einem mobilen Computer, beispielsweise einem Smartphone oder einem Tablet-Computer, verbindbar, und die Türstation erzeugt und/oder empfängt Daten, die in das Netzwerk übertragen werden. Der Server-Computer überträgt von der Türstation erzeugte Dateninhalte über das Netzwerk und die WLAN-Verbindung an den mobilen Computer, und von dem mobilen Computer erzeugte Dateninhalte über die WLAN-Verbindung über das Netzwerk an die Türstation.

Türkommunikationssystemen der eingangs genannten Art tragen mit Blick auf den Zugang von Personen zu dem Innenbereich zu einer erhöhten Sicherheit bei, indem sie es einem anwesenden Bewohner erlauben, vor dem Öffnen der Tür mit dem Besucher zu kommunizieren und ggf. über Video einen visuellen Eindruck von dem Besucher zu erhalten, um ihn ggf. als zugangsberechtigt zu authentifizieren. Hierbei ist eine aktive Interaktion des Bewohners mit dem Türkommunikationssystem erforderlich. Bei Abwesenheit des Bewohners von dem Innenbereich bzw. wenn der Besucher sich momentan nicht in der Nähe des Innengerätes aufhält oder keine Gelegenheit zu der Interaktion mit dem Türkommunikationssystem hat, erhält auch ein zugangsberechtigter Besucher folglich keinen Zugang zu dem Innenbereich. Andererseits kann eine unberechtigte Person in diesem Fall den Eindruck erhalten, dass kein Bewohner zu Hause und der Innenbereich dementsprechend momentan unbewacht ist, wodurch die unberechtigte Person ggf. motiviert werden kann, sich unberechtigt Zutritt zu dem Innenbereich zu verschaffen.

US 9 253 455 B1 beschreibt ein Sicherheitssystem, welches getriggert durch einen Bewegungssensor eine elektronische Sprachausgabe aktiviert.

Der vorliegenden Erfindung liegt die Aufgabe zugrunde, ein Türkommunikationssystem insbesondere unter dem Aspekt der Sicherheit zu verbessern und die vorgenannten Nachteile zu überwinden.

Diese Aufgabe wird mit einem Türkommunikationssystem nach Anspruch 1, mit einem Außengerät für ein Türkommunikationssystem nach Anspruch 7 sowie mit einem Verfahren zum Betrieb eines Türkommunikationssystems nach Anspruch 9 gelöst.

Ein erster Erfindungsaspekt betrifft ein Türkommunikationssystem für die Kommunikation zwischen einer in einem Außenbereich eines Bauwerks befindlichen Person und einer in einem Innenbereich des Bauwerks befindlichen Person, wobei der Außenbereich von dem Innenbereich durch eine Tür abtrennbar ist, mit
- wenigstens einem Außengerät, das zur ortsfesten Anordnung in dem Außenbereich vorgesehen ist und
- wenigstens einem von dem Außengerät räumlich separaten Innengerät, das zumindest von dem Innenbereich aus über wenigstens eine drahtlose Kommunikationsverbindung mit dem Außengerät verbindbar ist.
Dabei kann die Kommunikation zwischen der Person in dem Außenbereich und der Person in dem Innenbereich über die drahtlose Kommunikationsverbindung erfolgen.

Erfindungsgemäß umfasst das Türkommunikationssystem wenigstens eine elektronische Steuereinrichtung, die ausgebildet ist, in Abhängigkeit von wenigstens einem Auslöseereignis, das durch eine in dem Außenbereich befindliche Person ausgelöst und mittels des Außengeräts detektiert wird, Steuersignale zum Steuern wenigstens einer Anwesenheitssimulationsvorrichtung zu erzeugen, um in einer für die in dem Außenbereich befindliche Person wahrnehmbaren Weise die Anwesenheit einer Person in dem Innenbereich zu simulieren. Dabei umfasst die wenigstens eine Anwesenheitssimulationsvorrichtung wenigstens eine an dem Außengerät vorgesehene elektronisch steuerbare Stimmausgabe. Die steuerbare Stimmausgabe kann insbesondere eine Einrichtung zur Speicherung und zur vernehmbaren Wiedergabe einer Stimmnachricht aufweisen.

Mittels der elektronisch steuerbaren Stimmausgabe kann simuliert werden, dass ein Bewohner von dem Innenbereich aus mit der Person im Außenbereich kommuniziert. Beispielsweise kann mittels der elektronisch steuerbaren Stimmausgabe in Abhängigkeit der Steuersignale eine zuvor aufgenommene Sprachnachricht der Art "Kann ich Ihnen helfen?" ausgegeben werden, um bei einer Person in dem Außenbereich den Eindruck zu erwecken, dass der Innenbereich momentan bewohnt ist. Hierdurch kann eine nicht autorisierte Person in dem Außenbereich abgeschreckt werden, einen Einbruchsversuch in den Innenbereich zu unternehmen.

In einer Variante kann die wenigstens eine Anwesenheitssimulationsvorrichtung wenigstens eine weitere an dem Bauwerk und/oder an dem Außengerät vorgesehene elektronisch steuerbare Einrichtung aufweisen. Beispielsweise kann die Anwesenheitssimulationsvorrichtung eine Beleuchtungsvorrichtung in oder an dem Bauwerk umfassen. Alternativ oder zusätzlich kann die Anwesenheitssimulationsvorrichtung beispielsweise eine Musikanlage, ein Fernsehgerät und/oder eine fremdkraftbetätigbare Jalousie umfassen.

Das Außengerät und/oder das Innengerät kann die elektronische Steuereinrichtung insgesamt oder wenigstens teilweise umfassen. So kann die Steuereinrichtung beispielsweise ganz oder wenigstens teilweise von einer in dem Außengerät angeordneten Platine mit einer darauf implementierten Steuerlogik gebildet werden. Alternativ oder zusätzlich kann die elektronische Steuereinrichtung ganz oder wenigstens teilweise in dem Innengerät angeordnet sein. In einer Variante kann eine gesonderte Einheit, beispielsweise ein Computer-Server, vorgesehen sein, welche vorzugsweise in dem Innenbereich angeordnet ist und die elektronische Steuereinrichtung ganz oder wenigstens teilweise umfasst.

In einer Ausführungsform ist das Außengerät von einem Gehäuse umfasst. Dabei kann die mindestens eine elektronische Steuereinrichtung beispielsweise in dem Gehäuse des Außengeräts angeordnet sein.

Das Innengerät kann insbesondere ein Mobilgerät, wie z.B. ein Notebook, ein Tablet-PC oder ein Smartphone sein. Dabei kann die Steuereinrichtung ganz oder wenigstens teilweise von einer Computereinheit des Mobilgeräts gebildet werden, in welcher eine entsprechende Steuerlogik implementiert ist. Das Innengerät kann jedoch auch stationäre Geräte, wie zum Beispiel einen Desktop-PC oder ein Fernsehgerät umfassen. Auch bei einem derartigen stationären Innengerät kann die elektronische Steuereinrichtung ganz oder wenigstens teilweise in einer Computereinheit mit einer entsprechenden Steuerlogik ausgebildet sein. Das Innengerät ist ausgebildet, wenigstens von dem Innenbereich, über die drahtlose Kommunikationsverbindung mit dem Außengerät verbunden zu werden. Es kann gemäß einer Ausführungsvariante aber auch vorgesehen sein, dass die drahtlose Kommunikationsverbindung zwischen dem Innengerät und dem Außengerät auch hergestellt werden kann, wenn das Innengerät sich außerhalb des Innenbereichs befindet. So kann der Bewohner beispielsweise auch dann über sein Smartphone mit dem Außengerät kommunizieren, wenn er nicht zu Hause ist.

In einer vorteilhaften Ausführungsvariante sind die Steuersignale drahtlos von der elektronischen Steuereinrichtung an die Anwesenheitssimulationsvorrichtung übertragbar. Beispielsweise können die elektronische Steuereinrichtung und eine ansteuernde Einheit der Anwesenheitssimulationsvorrichtung über ein drahtloses Kommunikationsnetzwerk, wie zum Beispiel ein passwortgeschütztes WLAN-Netzwerk, verbindbar sein. Eine besonders einfache Integration des Türkommunikationssystems in eine gegebenenfalls bereits vorhandene Wireless-Infrastruktur des Bauwerks wird somit ermöglicht. Dies erlaubt ein flexibles und kostengünstiges Nachrüsten eines erfindungsgemäßen Türkommunikationssystems an einem Bauwerk.

In einer weiteren Ausführungsvariante ist die elektronische Steuereinrichtung ferner ausgebildet, in Abhängigkeit von Daten, die von dem Außengerät und/oder dem Innengerät bereitgestellt werden, ein Freigabesignal zum Betätigen wenigstens eines Funkschlosses zu erzeugen, welches an der Tür angeordnet ist. Dabei kann insbesondere vorgesehen sein, dass das Freigabesignal wenigstens streckenweise drahtlos von der elektronischen Steuereinrichtung an das Funkschloss übertragbar ist. Beispielsweise kann die Übertragung des Freigabesignals von der elektronischen Steuereinrichtung an das Funkschloss wenigstens streckenweise über eine Funkverbindung erfolgen. Das Freigabesignal kann z.B. von dem Bewohner durch eine manuelle Eingabe an dem Innengerät ausgelöst werden.

Alternativ oder zusätzlich kann das Freigabesignal auch durch eine Eingabe an dem Außengerät ausgelöst werden. In diesem Zusammenhang kann insbesondere vorgesehen sein, dass das Außengerät wenigstens eine Authentifizierungsschnittstelle zur Authentifizierung einer Person und/oder eines Sicherheitstokens aufweist. Das Freigabesignal zum Betätigen des Funkschlosses kann beispielsweise in Abhängigkeit von Daten, die in Folge einer Authentifizierung einer autorisierten Person an der Authentifizierungsschnittstelle bereitgestellt werden, erzeugt werden.

Gemäß einem bevorzugten Ausführungsbeispiel umfasst die Authentifizierungsschnittstelle dabei wenigstens eine biometrische Erfassungseinheit, insbesondere einen Fingerabdruckscanner. Mittels einer derartigen biometrischen Erfassungseinheit kann eine Authentifizierung einer autorisierten Person in besonders eindeutiger und zuverlässiger Weise erfolgen. Alternativ oder zusätzlich kann die Authentifizierungsschnittstelle wenigstens ein RFID ("radio-frequency identification")-Lesegerät aufweisen. Mittels eines RFID-Geräts kann beispielsweise ein Sicherheitstoken, der einen zugeordneten RFID-Chip enthält, und der nur autorisierten Personen ausgehändigt wird, erfasst und authentifiziert werden.

Es liegt auch im Rahmen der Erfindung, dass das Außengerät wenigstens ein Signalbetätigungselement, wie zum Beispiel einen Klingelknopf, aufweist, welches bei Betätigung eine Signalfunktion an dem Innengerät auslöst. Dabei kann vorgesehen sein, dass bei Betätigung des Signalbetätigungselements ein Auslösesignal der Signalfunktion an dem Innengerät drahtlos von dem Außengerät an das Innengerät übertragen wird. Es ist beispielsweise denkbar, dass bei Betätigung des Signalbetätigungselements von dem Außengerät über eine drahtlose Kommunikationsverbindung eine Push-Nachricht an ein Smartphone, welches als Innengerät fungiert, versendet wird. Auf diese Weise kann ein Benutzer des Smartphones darauf aufmerksam gemacht werden, dass sich eine Person an dem Außengerät befindet und Einlass in den Innenbereich begehrt.

Gemäß einer Variante ist an dem Außengerät ferner eine Kamera angeordnet, mittels derer bei Betätigung des Signalbetätigungselements automatisch wenigstens ein Bild aufgenommen werden kann. So kann beispielsweise ein digitales Foto und/oder Video von der Person in dem Außenbereich, die das Signalbetätigungselement betätigt hat, aufgenommen werden. Es kann ferner vorgesehen sein, dass das aufgenommene Foto und/oder das aufgenommene Video drahtlos an das Innengerät übertragen wird, um dem Benutzer des Innengeräts einen visuellen Eindruck von der in dem Außenbereich befindlichen Person zu vermitteln.

Es liegt auch im Rahmen der Erfindung, dass das Türkommunikationssystem weitere Hardwarekomponenten, insbesondere wenigstens einen Sensor zur Anordnung für Anwendungen der Gebäudeautomatisierungstechnik umfasst. Ein derartiger Sensor kann gemäß einer vorteilhaften Ausführungsform eine Sendevorrichtung zum Versenden von Sensordaten an das Außengerät über eine drahtlose Kommunikationsverbindung, z.B. Funk, Bluetooth, ZigBee, Z-Wave und/oder DECT, aufweisen. Es ist ferner denkbar, dass auf diese Weise zu dem Außengerät gelangte Sensordaten von dort über die drahtlose Kommunikationsverbindung, z.B. über WLAN, weiter an das Innengerät übermittelt werden. Das Innengerät kann dabei beispielsweise ein in dem Innenbereich angeordneter Computer-Server mit Internetanschluss sein. Auf diese Weise kann ein abwesender Bewohner aus der Ferne, über das Internet auf "Smart-Home"-Anwendungen, die auf den Sensordaten basieren, zugreifen.

Alternativ oder zusätzlich zu dem mindestens einen Sensor kann das Türkommunikationssystem wenigsten eine elektronisch ansteuerbare Einrichtung der Gebäudeautomatisierung umfassen. Ein abwesender Bewohner kann diese aus der Ferne steuern, wobei die Steuersignale über das Internet, den Computer-Server (als Innengerät), die drahtlose Kommunikationsverbindung (z.B. WLAN), das Außengerät und eine weitere drahtlose Kommunikationsverbindung (z.B. Funk, Bluetooth, ZigBee, Z-Wave und/oder DECT) zwischen dem Außengerät und der elektronisch ansteuerbaren Einrichtung übertragen werden. Das Außengerät stellt dabei eine Schnittstelle für die "letzte Meile" der Kommunikation dar, die beispielsweise per Funk, Bluetooth, ZigBee, Z-Wave und/oder DECT überbrückt wird. Demgegenüber stellt das Innengerät die Schnittstelle für die Fernkommunikation, beispielsweise über das Internet, dar, wobei das Außengerät und das Innengerät über die wenigstens eine drahtlose Kommunikationsverbindung miteinander kommunizieren können.

Ein zweiter Erfindungsaspekt betrifft ein Außengerät für ein Türkommunikationssystem, wobei das Außengerät zur ortsfesten Anordnung in einem Außenbereich eines Bauwerks vorgesehen ist, welcher durch eine Tür von einem Innenbereich des Bauwerks abtrennbar ist, und wobei das Außengerät wenigstens eine Übertragungsschnittstelle zum Herstellen einer drahtlosen Kommunikationsverbindung mit einem Innengerät des Kommunikationssystems aufweist. Dabei ist das Außengerät ausgebildet, wenigstens ein Auslöseereignis, das durch eine in dem Außenbereich befindliche Person ausgelöst wird, zu detektieren und in Abhängigkeit des Auslöseereignisses Steuersignale zum Steuern wenigstens einer Anwesenheitssimulationsvorrichtung zu erzeugen, um in einer für die in dem Außenbereich befindlichen Person wahrnehmbaren Weise die Anwesenheit einer Person in dem Innenbereich zu simulieren. Die wenigstens eine Anwesenheitssimulationsvorrichtung umfasst dabei wenigstens eine an dem Außengerät vorgesehene elektronisch steuerbare Stimmausgabe.

Ein erfindungsgemäßes Außengerät kann somit Teil eines erfindungsgemäßen Türkommunikationssystems sein. Folglich gelten diesbezüglich vorstehend und nachfolgend genannte Vorteile und Merkmale auch für Ausführungsbeispiele eines erfindungsgemäßen Außengeräts und umgekehrt.

Gemäß einem Ausführungsbeispiel umfasst das Außengerät wenigstens eine Übertragungsschnittstelle zur drahtlosen Übertragung der Steuersignale an eine ansteuernde Einheit der Anwesenheitssimulationsvorrichtung oder an eine vorgeschaltete, von der Anwesenheitssimulationsvorrichtung räumlich separate elektronische Steuervorrichtung. Wie vorstehend mit Bezug auf das erfindungsgemäße Türkommunikationssystem beschrieben, kann eine derartige elektronische Steuervorrichtung ganz oder wenigstens teilweise von dem Außengerät und/oder dem Innengerät umfasst sein. Zusätzlich oder alternativ kann eine gesonderte Steuervorrichtung vorgesehen sein, die sowohl von dem Außengerät als auch von dem Innengerät räumlich separat ist. Beispielsweise kann die Steuervorrichtung ganz oder wenigstens teilweise von einem - vorzugsweise in dem Innenbereich angeordneten - Server-Computer gebildet werden.

In einer Ausführungsform ist das Außengerät von einem Gehäuse umfasst. Dabei kann das Außengerät ausgebildet sein, die Steuersignale mittels einer in dem Gehäuse angeordneten elektronischen Steuereinrichtung zu erzeugen.

In einer Ausführungsvariante umfasst das Außengerät wenigstens einen Bewegungssensor zum Detektieren einer Bewegung als Auslöseereignis für das Erzeugen der Steuersignale.

Gemäß einem dritten Erfindungsaspekt wird ein Verfahren zum Betrieb eines Türkommunikationssystems vorgeschlagen. Das erfindungsgemäße Verfahren umfasst
- das Bereitstellen wenigstens eines Außengeräts, dass in einem Außenbereich eines Bauwerks ortsfest angebunden ist, wobei der Außenbereich sich eine Tür von einem Innenbereich des Bauwerks abtrennbar ist;
- das Bereitstellen wenigstens eines von dem Außengerät räumlich separaten Innengeräts, dass zumindest von dem Innenbereich aus mit dem Außengerät über wenigstens eine drahtlose Kommunikationsverbindung verbindbar ist;
- das Herstellen der drahtlosen Kombinationsverbindung für die Kommunikation zwischen einer in dem Außenbereich befindlichen Person und einer in dem Innenbereich befindlichen Person bei Bedarf;
- das Bereitstellen wenigstens einer Anwesenheitssimulationsvorrichtung, die ausgebildet ist, in einer für eine in dem Außenbereich befindliche Person wahrnehmbaren Weise die Anwesenheit einer Person in dem Innenbereich zu simulieren, wobei die wenigstens eine Anwesenheitssimulationsvorrichtung wenigstens eine an dem Außengerät vorgesehene elektronisch steuerbare Stimmausgabe umfasst;
- das Detektieren eines Auslöseereignisses durch das Außengerät, wobei das Auslöseereignis durch eine in dem Außenbereich befindliche Person ausgelöst wird; und
- das Erzeugen von Steuersignalen durch eine elektronische Steuereinrichtung zum Steuern der Anwesenheitssimulationsvorrichtung in Abhängigkeit von dem Auslöseereignis.

Ein erfindungsgemäßes Verfahren kann somit von einem erfindungsgemäßen Türkommunikationssystem umgesetzt sein, welches wiederum ein erfindungsgemäßes Außengerät umfassen kann. Folglich gelten vorstehend und nachfolgend genannte Vorteile und Merkmale eines erfindungsgemäßen Türkommunikationssystems und/oder eines Außengeräts für ein Türkommunikationssystem auch für Ausführungsbeispiele eines erfindungsgemäßen Verfahrens und umgekehrt.

In einer Ausführungsform ist das Außengerät von einem Gehäuse umfasst. Dabei kann die mindestens eine elektronische Steuereinrichtung beispielsweise in dem Gehäuse angeordnet sein.

In einer Variante ist vorgesehen, dass das Herstellen der wenigsten einen drahtlosen Kommunikationsverbindung nur dann ermöglicht wird, wenn wenigsten einmalig an einer Authentifizierungsschnittstelle des Außengeräts eine autorisierte Person und/oder ein autorisierter Sicherheitstoken erfasst worden ist. Beispielsweise kann vorgesehen sein, dass vor einem erstmaligen Verbindungsaufbau mittels einer Funkverbindung über einen Standard wie z.B. Bluetooth oder (passwortgeschütztem) WLAN an der Authentifizierungsschnittstelle eine erfolgreiche Authentifizierung einer entsprechend autorisierten Person erfolgen muss. Bevorzugt umfasst die Authentifizierungsschnittstelle eine biometrische Erfassungseinheit, wie z.B. einen Fingerabdruckscanner.

Gemäß einer Weiterbildung des erfindungsgemäßen Verfahrens wird ein an der Tür angeordnetes Funkschloss automatisch geöffnet, wenn an einer Authentifizierungsschnittstelle des Außengeräts eine autorisierte Person und/oder ein autorisierter Sicherheitstoken detektiert wird.

Ferner kann im Rahmen des erfindungsgemäßen Verfahrens vorgesehen sein, dass an dem Innengerät eine Signalfunktion ausgelöst wird, wenn ein an dem Außengerät angeordnetes Signalbetätigungselement, wie zum Beispiel ein Klingelknopf, betätigt wird. In einer Ausführungsvariante kann bei Betätigung des Signalbetätigungselements automatisch mittels einer an dem Außengerät angeordneten Kamera wenigstens ein Bild, zum Beispiel ein digitales Foto und/oder Video, aufgenommen und an das Innengerät übertragen werden. Die Übertragung des wenigstens einen Bildes erfolgt dabei bevorzugt über eine drahtlose Datenverbindung.

In einer weiteren Ausführungsvariante umfasst das Verfahren die folgenden Schritte:
- Erkennen durch eine Steuerlogik der elektronischen Steuereinrichtung, dass ein an dem Außengerät vorgesehener Bewegungssensor eine Bewegung detektiert hat, und
- Überprüfen durch die Steuerlogik, ob innerhalb einer vorbestimmten Zeitspanne nach dem Erkennen, dass der Bewegungssensor die Bewegung detektiert hat,
   - das Signalbetätigungselement betätigt wird und/oder
   - an der Authentifizierungsschnittstelle eine autorisierte Person und/oder ein autorisierter Sicherheitstoken erfasst wird.

Dabei kann ferner vorgesehen sein, dass die Anwesenheitssimulationsvorrichtung durch die Steuereinrichtung automatisch aktiviert wird, wenn die Überprüfung ergibt, dass innerhalb der vorbestimmten Zeitspanne
- das Signalbetätigungselement nicht betätigt worden ist und
- an der Authentifizierungsschnittstelle keine autorisierte Person und kein autorisierter Sicherheitstoken erfasst worden ist.

In einer Weiterbildung des vorstehend beschriebenen Verfahrens kann vorgesehen sein, dass die Steuerlogik nach dem Erkennen durch die Steuerlogik, dass der Bewegungssensor eine Bewegung detektiert hat, ferner überprüft, ob der Bewegungssensor innerhalb der vorbestimmten Zeitspanne eine weitere Bewegung erfasst, und dass die Anwesenheitssimulationsvorrichtung durch die Steuereinrichtung automatisch aktiviert wird, wenn die Überprüfung ergibt dass innerhalb der vorbestimmten Zeitspanne
- der Bewegungssensor eine weitere Bewegung erfasst hat,
- das Signalbetätigungselement nicht betätigt worden ist und
- an der Authentifizierungsschnittstelle keine autorisierte Person und kein autorisierter Sicherheitstoken erfasst worden ist.

In einer weiteren vorteilhaften Ausführungsvariante kann das Verfahren nach dem Aktivieren der Anwesenheitssimulationsvorrichtung die folgenden zusätzlichen Schritte umfassen:
- Überprüfen durch die Steuerlogik, ob innerhalb einer vorbestimmten Zeitspanne nach dem Aktivieren der Anwesenheitssimulationsvorrichtung
   - der Bewegungssensor eine weitere Bewegung erfasst,
   - das Signalbetätigungselement betätigt wird, und/oder
   - an der Authentifizierungsschnittstelle eine autorisierte Person und/oder ein autorisierter Sicherheitstoken erfasst wird, und
- wenn die Überprüfung ergibt, dass innerhalb der vorbestimmten Zeitspanne
   - der Bewegungssensor eine weitere Bewegung erfasst hat,
   - das Signalbetätigungselement nicht betätigt worden ist und
   - an der Authentifizierungsschnittstelle keine autorisierte Person und kein autorisierter Sicherheitstoken erfasst worden ist,
   automatisches Aufnehmen wenigstens eines Bildes mittels einer an dem Außengerät angeordneten Kamera und Übertragen des Bildes an das Innengerät. Dabei kann das Übertragen des wenigstens einen Bildes von dem Außengerät an das Innengerät bevorzugt drahtlos erfolgen.

Die beigefügten Figuren veranschaulichen mögliche Ausführungsbeispiele der Erfindung.

Hierbei zeigen:
- Figur 1: ein Ausführungsbeispiel eines erfindungsgemäßen Türkommunikationssystems mit einem Außengerät, einem Innengerät und mehreren Anwesenheitssimulationsvorrichtungen;
- Figur 2: schematisch und mit weiteren Details das Außengerät des Türkommunikationssystems der Figur 1;
- Figur 3A: ein Ausführungsbeispiel eines Außengeräts in einer Innenansicht bei geöffnetem Gehäuse; und
- Figur 3B: eine Frontalansicht des Außengeräts aus Figur 3A bei geschlossenem Gehäuse.

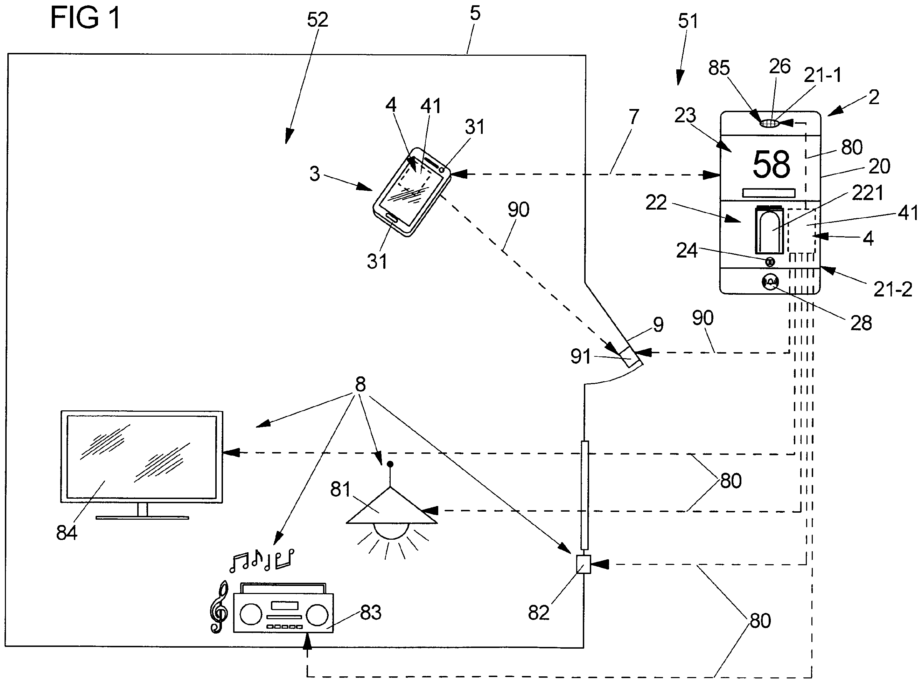

Die Figur 1 zeigt schematisch ein Türkommunikationssystem 1 an einem Bauwerk 5, wobei das Bauwerk einen Innenbereich 52 und einen Außenbereich 51 definiert. Dabei ist der Außenbereich 51 von dem Innenbereich 52 durch eine Tür 9 abtrennbar. Beispielsweise kann es sich bei dem Bauwerk 5 um ein Einfamilienhaus oder eine Wohnung mit einer Haus- bzw. Wohnungstür 9 handeln. Für die Kommunikation zwischen einer in dem Außenbereich 51 befindlichen Person (im Folgenden auch "Besucher" genannt) und einer in dem Innenbereich 52 befindlichen Person (im Folgenden auch "Bewohner" genannt) ist in dem Außenbereich ein Außengerät 2 ortsfest angeordnet, während in dem Innenbereich 52 ein Innengerät 3 vorgesehen ist. Das Innengerät 3 ist zumindest von dem Innenbereich 52 aus über eine drahtlose Kommunikationsverbindung 7 mit dem Außengerät 2 verbindbar, um eine Kommunikation zwischen dem Bewohner und dem Besucher zu ermöglichen.

In dem Ausführungsbeispiel gemäß der Figur 1 ist das Innengerät 3 ein Smartphone. In anderen (nicht dargestellten) Ausführungsformen kann das Innengerät 3 ein anderes Mobilgerät als ein Smartphone, wie zum Beispiel ein Notebook oder ein Tablet-PC sein. Es ist aber auch denkbar, dass ein stationäres Gerät, wie zum Beispiel ein Desktop-PC oder ein Fernsehgerät als Innengeräts 3 des Türkommunikationssystems 1 verwendet wird.

Um die Kommunikation zwischen dem Bewohner und dem Besucher zu ermöglichen, umfasst das Innengerät 3 akustische und/oder optische Kommunikationsschnittstellen 31. Beispielsweise kann eine an den Smartphone 3 vorgesehene Kamera 31 als optische Kommunikationsschnittstelle dienen. Ein Lautsprecher 31 sowie ein Mikrofon 31 des Smartphones 3 können als akustische Kommunikationsschnittstellen 31 verwendet werden.

Das Außengerät 2, welches beispielsweise in der Nähe der Tür 9 an dem Bauwerk 5 angeordnet sein kann, umfasst ebenfalls derartige akustische und/oder optische Kommunikationsschnittstellen 21-1, 21-2. Sowohl das Innengerät 3 als auch das Außengerät 2 umfassen Mittel, um eine drahtlose Kommunikationsverbindung 7 miteinander herzustellen. Beispielsweise kann die drahtlose Kommunikationsverbindung 7 mittels einer Funkverbindung und/oder einer passwortgeschützten WLAN-Verbindung im Rahmen einer gegebenenfalls bereits vorhandenen Wireless-Infrastruktur des Bauwerks 5 hergestellt werden. Mittels der drahtlosen Kommunikationsverbindung 7 kann eine sprach- und/oder bildbasierte Kommunikation zwischen dem Besucher an dem Außengerät 2 und dem Bewohner, der über das Innengerät 3 verfügt, erfolgen.

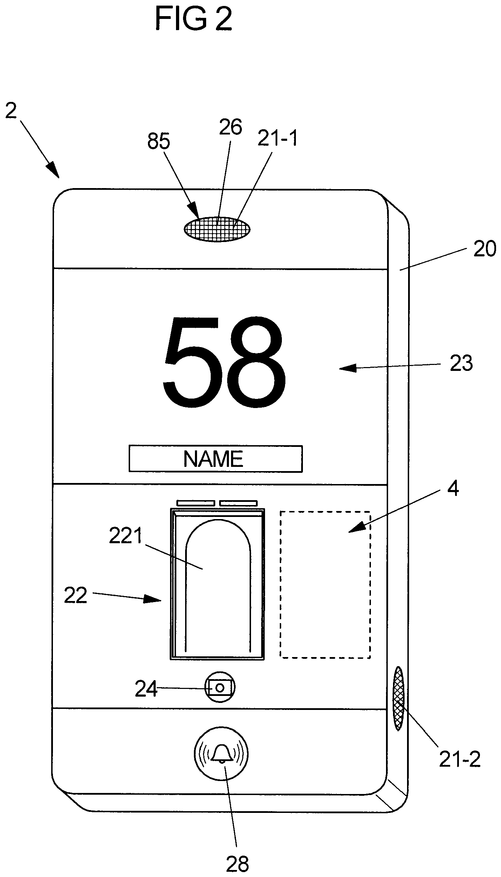

In Figur 2 ist das Außengerät 2 in größerem Detail dargestellt. In dem gezeigten Ausführungsbeispiel weist das Außengerät 2 als gestalterisches Element eine Darstellungsfläche 23 zur Anzeige der Hausnummer "58" sowie des Namens des Bewohners auf. Oberhalb der Darstellungsfläche 23 ist als eine akustische Kommunikationsschnittstelle ein Mikrofon 21-1 vorgesehen. In der Nähe des Mikrofons 21-1 ist in dem oberen Bereich des Außengeräts 2 ferner ein Bewegungssensor 26 zum Detektieren einer Bewegung in Nahbereich des Außengeräts 2 angeordnet. An einer Seitenfläche des Außengeräts 2 ist für die akustische Kommunikation ein Lautsprecher 21-2 vorgesehen. An der Vorderseite unterhalb der Darstellungsfläche 23 weist das Außengerät 2 als Authentifizierungsschnittstelle 22 einen Fingerabdruckscanner 221 auf. Alternativ oder zusätzlich zu dem Fingerabdruckscanner 221 können als Authentifizierungsschnittstelle 22 auch andere biometrische Erfassungseinheit und/oder beispielsweise ein RFID-Lesegerät an dem Außengerät 2 vorgesehen sein. Mittels derartiger Authentifizierungsschnittstellen 22 kann eine Person und/oder ein Sicherheitstoken authentifiziert und gegebenenfalls auf eine Zugangsberechtigung zu dem Innenbereich 52 hin überprüft werden.

An der Vorderseite des Außengeräts 2 ist ferner eine Kamera 24 angeordnet, die als eine optische Kommunikationsschnittstelle für die Kommunikation dient. Die Kamera 24 kann zur Aufnahme von digitalen Fotos und/oder Videos ausgebildet sein.

Zusätzlich weist das Außengerät 2 an seiner Vorderseite im unteren Bereich ein Signalbetätigungselement 28 in Form eines Klingelknopfes auf. Eine Betätigung des Klingelknopfes 28 kann beispielsweise ein in dem Innenbereich 52 des Bauwerks 5 hörbares Klingelsignal auslösen. Zusätzlich oder alternativ hierzu kann bei Betätigung des Klingelknopfes 28 eine Signalfunktion an dem Innengerät 3 ausgelöst werden. Beispielsweise kann bei Betätigung des Klingelknopfes 28 ein Auslösesignal von dem Außengerät 2 an das Innengerät 3 drahtlos übertragen werden, um die Signalfunktion auszulösen. Das Auslösesignal kann beispielsweise eine Push-Nachricht an das Smartphone 3 des Bewohners übermitteln, um diesem zu signalisieren, dass ein Besucher an der Tür 9 Einlass in dem Innenbereich 52 begehrt.

Die vorgenannten Elemente des Außengeräts 2 sind sämtlich in oder an einem Gehäuse 20 des Außengeräts 2 angeordnet. Somit kann das Außengerät 2 als kompakte Einheit in dem Außenbereich 51, beispielsweise in der Nähe der Tür 9, angeordnet werden.

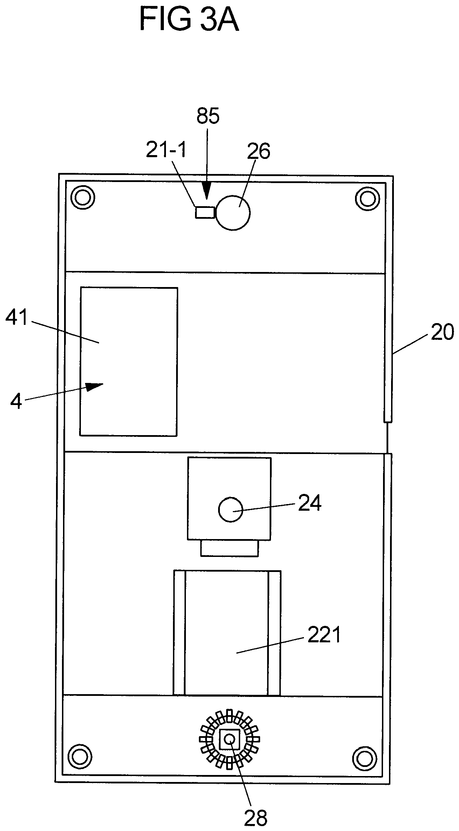

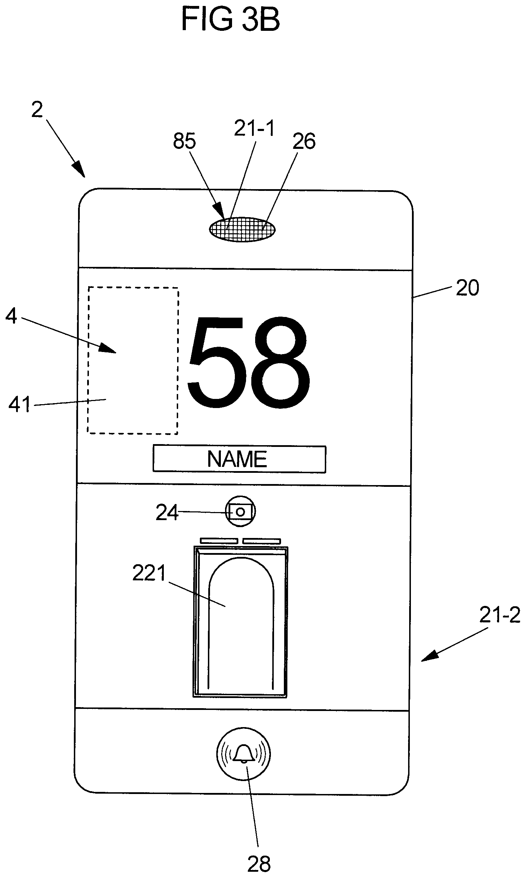

Die Figur 3A zeigt beispielhaft eine Innenansicht eines erfindungsgemäßen Außengeräts 2 von vorn bei geöffnetem Gehäuse 20, aus der eine vorteilhafte Anordnung der vorgenannten Elemente 21-1, 221, 26, 28, 4 ersichtlich ist. Zur erleichterten Zuordnung ist dieser Abbildung in Figur 3B eine entsprechende Frontalansicht des Außengeräts 2 aus Figur 3A bei geschlossenem Gehäuse 20 gegenübergestellt.

Im Innern des Gehäuses 20 umfasst das Außengerät 2 ferner eine elektronische Steuereinrichtung 4, die ausgebildet ist, Steuersignale 80 zum Steuern von einer oder mehreren Anwesenheitssimulationsvorrichtungen 8 zu erzeugen, um in einer für eine in dem Außenbereich 51 befindliche Person wahrnehmbaren Weise die Anwesenheit einer Person in dem Innenbereich 52 zu simulieren.

In dem in der Figur 1 gezeigten Ausführungsbeispiel sind als Anwesenheitssimulationsvorrichtungen 8 mehrere elektronisch steuerbare Einrichtungen 81, 82, 83, 84, 85 vorgesehen. So sind in dem Innenbereich 52 eine Beleuchtungsvorrichtung 81, eine fremdkraftbetätigbare Jalousie 82, eine Musikanlage 83 sowie ein Fernsehgerät 84 als Anwesenheitssimulationsvorrichtungen 8 vorgesehen. Zusätzlich weist das Außengerät 2 als eine weitere Anwesenheitssimulationsvorrichtung 8 eine elektronisch steuerbare Stimmausgabe 85 auf. Die elektronisch steuerbare Stimmausgabe 85 kann, wie in den Fig. 1 bis 3A illustriert, in dem Gehäuse 20 des Außengeräts 2 angeordnet sein. Dabei kann die elektronische Stimmausgabe 85 beispielsweise im Bereich des Mikrofons 21-1 und/oder des Bewegungssensors 26 angeordnet sein, wie in den Fig. 1 bis 3A angedeutet. Es kann in einer Ausführungsform aber auch vorgesehen sein, dass die elektronische Stimmausgabe 85 im Bereich des Lautsprechers 21-2 (vgl. Fig. 1-3A) angeordnet ist oder den Lautsprecher 21-2 umfasst und für die vernehmbare Wiedergabe einer gespeicherten Stimmnachricht nutzt.

Das Außengerät 2 hat eine Übertragungsschnittstelle zur drahtlosen Übertragung der Steuersignale 80 an jeweilige ansteuernde Einheiten der in dem Innenbereich 52 angeordneten Anwesenheitssimulationsvorrichtungen 81, 82, 83, 84. Dabei werden die Steuersignale 80 von der elektronischen Steuereinrichtung 4 in Abhängigkeit eines Auslöseereignisses erzeugt, welches durch eine in dem Außenbereich 51 befindliche Person ausgelöst und von dem Außengerät 2 detektiert wird. Beispielsweise kann das Auslöseereignis eine Bewegung eines Objekts im Nahbereich des Außengeräts 2 sein, welche durch den Bewegungssensor 26 detektiert wird.

In einer anderen Ausführungsvariante kann die Steuereinrichtung 4 zusätzlich oder alternativ zu der Anordnung in dem Außengerät 2 wenigstens teilweise in dem Innengerät 3 angeordnet sein, wie in Figur 1 gezeigt. In einer weiteren Ausführungsvariante kann eine von dem Außengerät 2 und dem Innengerät 3 räumlich separate Steuereinrichtung 4 vorgesehen sein, die vorzugsweise in dem Innenbereich 52 angeordnet ist. Beispielsweise kann ein Computer-Server (nicht dargestellt) als eine solche separate Steuereinrichtung 4 eingesetzt werden.

An der Tür 9 ist ein Funkschloss 91 angeordnet, welches auf ein von der Steuereinrichtung 4 erzeugtes Freigabesignal 90 hin betätigt werden kann, um die Tür 9 ferngesteuert zu öffnen. Dabei ist das Freigabesignal 90 drahtlos von der elektronischen Steuereinrichtung 4 an das Funkschloss eine 90 übertragbar. Beispielsweise kann das Freigabesignal 90 für die Betätigung des Funkschlosses 91 automatisch von der elektronischen Steuereinrichtung 4 erzeugt werden, wenn an dem Fingerabdruckscanner 221 oder an einer anderen Authentifizierungsschnittstelle 22 des Außengeräts 2 eine autorisierte Person und/oder ein autorisierter Sicherheitstoken erfasst wird.

Mittels des Innengeräts 3 hat auch der Bewohner die Möglichkeit, ein Freigabesignal 90 zum Öffnen des Funkschlosses 91 zu erzeugen. Auf dem Smartphone 3 kann z.B. eine Anwendungssoftware installiert sein, welche dem Bewohner auf einem Touchscreen des Smartphones 3 einen virtuellen Button zum Betätigen des Funkschlosses 91, d.h. zum Erzeugen und Versenden des Freigabesignals 90, bereitstellt.

Im Folgenden werden weitere Einzelheiten eines erfindungsgemäßen Verfahrens zum Betrieb des in der Figur 1 dargestellten Türkommunikationssystems 1 beschrieben werden.

Wenn sich ein Besucher im Außenbereich 51 der Haustür 9 - und damit dem in der Nähe der Haustür 9 angeordneten Außengerät 2 - nähert, wird die Bewegung des Besuchers von dem Bewegungssensor 26 erfasst. Dieses Auslöseereignis wird von der Steuerlogik 41 der elektronischen Steuereinrichtung 4 erkannt. Infolgedessen erwacht das Außengerät 2 aus einem Stand-by-Betriebszustand, wobei die Kamera 24 aktiviert wird. Bei Dunkelheit kann dabei zusätzlich automatisch eine Lichtanlage zum Ausleuchten des Nahbereichs des Außengeräts 2 aktiviert werden, um Bildaufnahmen des Besuchers mittels der Kamera 24 zu ermöglichen.

Ist der Besucher zu dem Zugang zu dem Innenbereich 51 berechtigt ist, so kann er sich an dem Fingerabdruckscanner 221 anhand eines zuvor eingelernten Fingerabdrucks identifizieren. Zusätzlich oder alternativ kann eine Authentifizierung mittels eines Sicherheitstokens an einem RFID-Lesegerät erfolgen, welches als Authentifizierungsschnittstelle 22 an dem Außengerät 2 vorgesehen sein kann. Nach einer erfolgreichen Authentifizierung einer autorisierten Person und/oder eines autorisierten Sicherheitstokens wird das Funkschloss 91 zum Öffnen der Haustür 9 automatisch betätigt. Zu diesem Zweck wird ein Freigabesignal 90 für die Betätigung des Funkschlosses 91 automatisch von der elektronischen Steuereinrichtung 4 erzeugt und drahtlos an das Funkschloss 91 übermittelt, wenn an dem Fingerabdruckscanner 221 oder an einer anderen Authentifizierungsschnittstelle 22 des Außengeräts 2 eine autorisierte Person und/oder ein autorisierter Sicherheitstoken detektiert wird.

Alternativ zu einer Authentifizierung an der Authentifizierungsschnittstelle 22 kann der Besucher den Klingelknopf 28 betätigen und hierdurch ein in dem Innenbereich 52 des Bauwerks 5 hörbares Klingelsignal auslösen. Bei Betätigung des Klingelknopfes 28 wird eine Signalfunktion an dem Innengerät 3 ausgelöst. Beispielsweise kann bei Betätigung des Klingelknopfes 28 ein Auslösesignal von dem Außengerät 2 an das Innengerät 3 drahtlos übertragen werden, um die Signalfunktion an dem Innengerät 3 auszulösen. Das Auslösesignal kann beispielsweise eine Push-Nachricht an das Smartphone 3 des Bewohners übermitteln, um dem Bewohner zu signalisieren, dass ein Besucher sich an der Tür 9 befindet und Einlass in dem Innenbereich 52 begehrt.

Bei Betätigung des Signalbetätigungselements 28 wird ein digitales Foto und/oder Video des Besuchers aufgenommen und drahtlos an das Smartphone 3 übertragen, um dem Bewohner einen visuellen Eindruck des Besuchers zu vermitteln. Über das Smartphone 3, die drahtlose Kommunikationsverbindung 7 und das Außengerät 2 kann der Bewohner in einen Dialog mit dem Besucher treten, wobei über die jeweiligen akustischen und/oder optischen Kommunikationsschnittstellen 21-1, 21-2, 31 und die drahtlose Kommunikationsverbindung 7 Audio- und Bilddaten ausgetauscht werden können.

Zum Ermöglichen eines sprach- und/oder bildbasierten Dialogs zwischen dem Besucher und dem Bewohner kann auf dem Smartphone 3 beispielsweise eine entsprechende Anwendungssoftware installiert sein. Alternativ kann die Kommunikation auch über eine browser-basierte Anwendung erfolgen, wobei ein entsprechendes Browserfenster auf einem Touchscreen des Smartphones 3 angezeigt wird.

Wenn der Bewohner den Besucher aufgrund des visuellen Eindrucks und/oder des Dialogs als zutrittsberechtigt identifiziert und ihm den Zutritt zu dem Innenbereich 52 gewähren möchte, kann er durch eine manuelle Eingabe an dem Smartphone 3 ein Freigabesignal 90 zum Öffnen des Funkschlosses 91 auslösen. Das Freigabesignal 90 wird von der Steuereinrichtung 4 erzeugt und drahtlos von dem Smartphone 3 an das Funkschloss 91 übertragen. Zu diesem Zweck kann im Rahmen der Anwendungssoftware oder in dem Browserfenster ein virtueller Button zum Betätigen des Funkschlosses 91, d.h. zum Erzeugen und Versenden des Freigabesignals 90, vorgesehen sein.

Nachdem die Steuerlogik 41 der Steuereinrichtung 4 erkannt hat, dass der Bewegungssensor 26 als Auslöseereignis eine Bewegung detektiert hat, wird durch die Steuerlogik 41 überprüft, ob innerhalb einer vorbestimmten Zeitspanne, die beispielsweise 15 Sekunden betragen kann,
- der Bewegungssensor 26 innerhalb der vorbestimmten Zeitspanne eine weitere Bewegung erfasst,
- das Signalbetätigungselement 28 betätigt wird und/oder
- an dem Fingerabdruckscanner 221 oder an einer anderen Authentifizierungsschnittstelle 22 eine autorisierte Person und/oder ein autorisierter Sicherheitstoken erfasst wird.

Wenn die Überprüfung ergibt, dass innerhalb der vorbestimmten Zeitspanne
- der Bewegungssensor 26 keine weitere Bewegung detektiert hat,
- das Signalbetätigungselement 28 nicht betätigt worden ist und
- an dem Fingerabdruckscanner 221 oder an einer anderen Authentifizierungsschnittstelle 22 keine autorisierte Person und kein autorisierter Sicherheitstoken erfasst worden ist,
versetzt die Steuereinrichtung 4 das Außengerät 2 wieder in den Standby-Betriebszustand. Das Ausbleiben einer weiteren Bewegung im Erfassungsbereich des Bewegungssensors 26 wird in diesem Fall dahingehend interpretierte, dass der Besucher sich bereits wieder entfernt hat oder es sich bei dem Detektieren der ersten Bewegung um einen Fehler gehandelt hat.

Wenn die Überprüfung jedoch ergibt, dass innerhalb der vorbestimmten Zeitspanne
- der Bewegungssensor 26 eine weitere Bewegung detektiert hat,
- das Signalbetätigungselement 28 nicht betätigt worden ist und
- an dem Fingerabdruckscanner 221 oder an einer anderen Authentifizierungsschnittstelle 22 keine autorisierte Person und kein autorisierter Sicherheitstoken erfasst worden ist,
wird mittels der Kamera 24 automatisch ein digitales Foto und/oder Video des Nahbereichs der Außengeräts 2 aufgenommen und mit einer Push-Nachricht drahtlos von dem Außengerät 2 an das Smartphone 3 übertragen. Beispielsweise kann dabei eine Live-Videoüberwachung mittels der Kamera 24 gestartet werden. Hierdurch kann dem Bewohner ein visueller Eindruck eines - möglicherweise ungebetenen - Besuchers vermittelt werden. Um die Aufmerksamkeit des Bewohners zu wecken, kann die Push-Nachricht zugleich eine Signalfunktion an dem Smartphone 3 auslösen.

Zusätzlich wird im Falle des letztgenannten Ergebnisses der Überprüfung durch die Steuereinrichtung 4 wenigstens eine der Anwesenheitssimulationsvorrichtungen 8, 81, 82, 83, 84, 85 aktiviert, um in einer für eine in dem Außenbereich 51 befindliche Person wahrnehmbaren Weise die Anwesenheit einer Person in dem Innenbereich 52 zu simulieren. Beispielsweise kann die Steuereinrichtung 4 die Beleuchtungseinrichtung 81, die fremdkraftbetätigbare Jalousie 82, die Musikanlage 83 oder den Fernseher 84 betätigen. Dabei können die Beleuchtungseinrichtung 81, die Musikanlage 83 oder den Fernseher 84 in dem Innenbereich 52 derart angeordnet sein, dass Sie optisch und/oder akustisch wahrnehmbar in den Außenbereich 51 hinein wirken.

Das Betätigen der Anwesenheitssimulationsvorrichtung 8 kann insbesondere das Aktivieren der an dem Außengerät 2 vorgesehenen elektronisch steuerbaren Stimmausgabe 85 umfassen. Beispielsweise kann mittels der elektronisch steuerbaren Stimmausgabe 85 eine zuvor aufgenommene Sprachnachricht der Art "Kann ich Ihnen helfen?" ausgegeben werden, um bei einer Person in dem Außenbereich 51 den Eindruck zu erwecken, dass der Innenbereich 52 momentan bewohnt ist. Ein ungebetener Besucher kann auf diese Weise davon abgeschreckt werden, einen Einbruchsversuch in den Innenbereich 51 zu unternehmen.

Die Steuerlogik 41 kann in einem weiteren Schritt ferner überprüfen, ob innerhalb einer weiteren vorbestimmten Zeitspanne (z.B. wiederum 15 Sekunden) nach dem Aktivieren wenigstens einer der Anwesenheitssimulationsvorrichtungen 8, 81, 82, 83, 84, 85
- der Bewegungssensor 26 eine weitere Bewegung erfasst,
- das Signalbetätigungselement 28 betätigt wird, und/oder
- an der Authentifizierungsschnittstelle 22, 221 eine autorisierte Person und/oder ein autorisierter Sicherheitstoken erfasst wird.

Wenn diese Überprüfung ergibt, dass innerhalb der vorbestimmten Zeitspanne
- der Bewegungssensor 26 eine weitere Bewegung erfasst hat,
- das Signalbetätigungselement 28 nicht betätigt worden ist und
- an der Authentifizierungsschnittstelle 22, 221 keine autorisierte Person und kein autorisierter Sicherheitstoken erfasst worden ist,
löst die elektronische Steuereinrichtung 41 die Aufnahme eines digitalen Fotos oder Videos des Nahbereichs der Außengeräts 2 mittels der an dem Außengerät 2 angeordneten Kamera 24 sowie das Übertragen des digitalen Fotos oder Videos an das Smartphone 3 des Bewohners aus. Wie vorstehend beschrieben, kann das digitale Foto und/oder Video mit einer Push-Nachricht drahtlos von dem Außengerät 2 an das Smartphone 3 übertragen werden. Beispielsweise kann eine Live-Videoüberwachung mittels der Kamera 24 gestartet werden. Hierdurch kann dem Bewohner ein visueller Eindruck eines - möglicherweise ungebetenen - Besuchers vermittelt werden. Um die Aufmerksamkeit des Bewohners zu wecken, kann die Push-Nachricht zugleich an dem Smartphone 3 eine Signalfunktion, wie z.B. einen "stillen Alarm", auslösen.

Die vorstehend beschriebene Funktionalität des Innengeräts 3 im Rahmen des erfindungsgemäßen Türkommunikationssystems 1 kann optional in flexibler Weise mit diversen aus der Gebäudeautomatisierungstechnik an sich bekannten "Smart-Home"-Anwendungen verbunden werden. So kann das Innengerät 3 beispielsweise zusätzlich für das Scharf- bzw. Unscharfschalten einer Alarmanlage und/oder für eine automatisierte Licht-, Jalousien-, Elektrizitäts- und/oder Heizungssteuerung verwendet werden. Alternativ oder zusätzlich kann das Innengerät 3 für gesundheitsrelevante Überwachungsfunktionen eingesetzt werden, die z.B. eine Raumtemperatur, eine Raumfeuchte oder einen Sauerstoff-, Kohlenstoffdioxid- und/oder Schadstoffgehalt der Raumluft betreffen. Auch sicherheitsrelevante Überwachungsfunktionen, wie z.B. eine Rauch-, Feuermelde- und/oder Glasbruch-Alarmfunktion können über das Innengerät 3 und ggf. eine entsprechende Anwendungssoftware mit dem Türkommunikationssystem 1 integriert werden.

Es liegt auch im Rahmen der Erfindung, dass das Türkommunikationssystem weitere Hardwarekomponenten, insbesondere wenigstens einen Sensor für die vorstehend beispielhaft genannten Anwendungen der Gebäudeautomatisierungstechnik umfasst. Ein derartiger Sensor kann gemäß einer vorteilhaften Ausführungsform eine Sendevorrichtung zum Versenden von Sensordaten an das Außengerät 2 über eine drahtlose Kommunikationsverbindung, z.B. Funk, Bluetooth, ZigBee, Z-Wave und/oder DECT, aufweisen. Es ist ferner denkbar, dass auf diese Weise zu dem Außengerät gelangte Sensordaten von dort über die drahtlose Kommunikationsverbindung 7, z.B. über WLAN, weiter an das Innengerät 3 übermittelt werden. Das Innengerät 3 kann dabei beispielsweise ein in dem Innenbereich 52 angeordneter Computer-Server mit Internetanschluss sein. Auf diese Weise kann ein abwesender Bewohner aus der Ferne, über das Internet auf "Smart-Home"-Anwendungen, die auf den Sensordaten basieren, zugreifen.

Alternativ oder zusätzlich zu dem mindestens einen Sensor kann das Türkommunikationssystem wenigsten eine elektronisch ansteuerbare Einrichtung der Gebäudeautomatisierung umfassen. Ein abwesender Bewohner kann diese aus der Ferne steuern, wobei die Steuersignale über das Internet, den Computer-Server (als Innengerät), die drahtlose Kommunikationsverbindung 7 (z.B. WLAN), das Außengerät und eine weitere drahtlose Kommunikationsverbindung (z.B. Funk, Bluetooth, ZigBee, Z-Wave und/oder DECT) zwischen dem Außengerät 2 und der elektronisch ansteuerbaren Einrichtung übertragen werden. Das Außengerät 2 stellt dabei eine Schnittstelle für die "letzte Meile" der Kommunikation dar, die beispielsweise per Funk, Bluetooth, ZigBee, Z-Wave und/oder DECT überbrückt wird. Demgegenüber stellt das Innengerät 3 die Schnittstelle für die Fernkommunikation, beispielsweise über das Internet dar, wobei das Außengerät 2 und das Innengerät 3 über die drahtlose Kommunikationsverbindung 7 miteinander kommunizieren können.

### Bezugszeichenliste

- 1: Türkommunikationssystem

- 2: Außengerät
- 20: Gehäuse
- 21-1: Mikrofon
- 21-2: Lautsprecher
- 22: Authentifizierungsschnittstelle
- 221: Biometrische Erfassungseinheit
- 23: Darstellungsfläche
- 24: Kamera
- 26: Bewegungssensor
- 28: Signalbetätigungselement

- 3: Innengerät
- 31: Kommunikationsschnittstelle

- 4: Elektronische Steuereinrichtung
- 41: Steuerlogik

- 5: Bauwerk
- 51: Außenbereich
- 52: Innenbereich

- 8: Anwesenheitssimulationsvorrichtung
- 80: Steuersignal
- 81: Beleuchtungsvorrichtung
- 82: Fremdkraftbetätigbare Jalousie
- 83: Musikanlage
- 84: Fernsehgerät
- 85: Elektronisch steuerbare Stimmausgabe

- 9: Tür
- 90: Freigabesignal
- 91: Funkschloss

## Patentansprüche

1. Türkommunikationssystem (1) für die Kommunikation zwischen einer in einem Außenbereich (51) eines Bauwerks (5) befindlichen Person und einer in einem Innenbereich (52) des Bauwerks (5) befindlichen Person, wobei der Außenbereich (51) von dem Innenbereich (52) durch eine Tür (9) abtrennbar ist, mit
- einem Außengerät (2), das zur ortsfesten Anordnung in dem Außenbereich (51) vorgesehen ist und das folgendes aufweist:
- ein Signalbetätigungselement (28) zum Auslösen einer Signalfunktion an dem Innengerät (3);
- eine Authentifizierungsschnittstelle (22, 221) zur Authentifizierung einer Person und/oder eines Sicherheitstokens; und
- einen Bewegungssensor (26) zur Detektion einer Bewegung in dem Außenbereich (51)
- wenigstens einem von dem Außengerät (2) räumlich separaten Innengerät (3), das zumindest von dem Innenbereich (52) aus über wenigstens eine drahtlose Kommunikationsverbindung (7) mit dem Außengerät (2) verbindbar ist;
- einer elektronischen Steuereinrichtung (4), die ausgebildet und eingerichtet ist, ein Freigabesignal (90) zum Öffnen eines an der Tür (9) angeordneten Funkschlosses (91) zu erzeugen, wenn an der Authentifizierungsschnittstelle (22, 221) eine autorisierte Person und/oder ein autorisierter Sicherheitstoken erfasst wird;
- wenigstens einer Anwesenheitssimulationsvorrichtung (8, 81, 82, 83, 84, 85), die ausgebildet ist, in einer für eine in dem Außenbereich (51) befindliche Person wahrnehmbaren Weise die Anwesenheit einer Person in dem Innenbereich (52) zu simulieren, wobei die wenigstens eine Anwesenheitssimulationsvorrichtung (8, 81, 82, 83, 84, 85) wenigstens eine an dem Außengerät (2) vorgesehene elektronisch steuerbare Stimmausgabe (85) umfasst;
**dadurch gekennzeichnet, dass**
die elektronische Steuereinrichtung (4) ausgebildet und eingerichtet ist, die folgenden Schritte auszuführen:
- Erkennen durch eine Steuerlogik (41), dass der Bewegungssensor (26) eine Bewegung detektiert hat;
- Überprüfen durch die Steuerlogik (41), ob innerhalb einer vorbestimmten Zeitspanne nach dem Erkennen, dass der Bewegungssensor (26) die Bewegung detektiert hat,
- der Bewegungssensor (26) eine weitere Bewegung erfasst und/oder
- das Signalbetätigungselement (28) betätigt wird und/oder
- an der Authentifizierungsschnittstelle (22, 221) eine autorisierte Person und/oder ein autorisierter Sicherheitstoken erfasst wird; und
- Erzeugen von Steuersignalen (80) und hierdurch Aktivieren der Anwesenheitssimulationsvorrichtung (8, 81, 82, 83, 84, 85), wenn die Überprüfung ergibt, dass innerhalb der vorbestimmten Zeitspanne
- der Bewegungssensor (26) eine weitere Bewegung detektiert hat und
- das Signalbetätigungselement (28) nicht betätigt worden ist und
- an der Authentifizierungsschnittstelle (22, 221) keine autorisierte Person und kein autorisierter Sicherheitstoken erfasst worden ist.

2. Türkommunikationssystem (1) nach Anspruch 1, **dadurch gekennzeichnet, dass** die elektronische Steuereinrichtung (4) ausgebildet und eingerichtet ist, die folgenden weiteren Schritte auszuführen:
- Überprüfen durch die Steuerlogik (41), ob innerhalb einer vorbestimmten Zeitspanne nach dem Aktivieren der Anwesenheitssimulationsvorrichtung (8, 81, 82, 83, 84, 85)
- der Bewegungssensor (26) eine weitere Bewegung detektiert und/oder
- das Signalbetätigungselement (28) betätigt wird und/oder
- an der Authentifizierungsschnittstelle (22, 221) eine autorisierte Person und/oder ein autorisierter Sicherheitstoken erfasst wird, und
- wenn die Überprüfung ergibt, dass innerhalb der vorbestimmten Zeitspanne
- der Bewegungssensor (26) eine weitere Bewegung detektiert hat und
- das Signalbetätigungselement (28) nicht betätigt worden ist und
- an der Authentifizierungsschnittstelle (22, 221) keine autorisierte Person und kein autorisierter Sicherheitstoken erfasst worden ist,
automatisches Aufnehmen wenigstens eines Bildes mittels einer an dem Außengerät (2) angeordneten Kamera (24) und Übertragen des Bildes an das Innengerät (3).

3. Türkommunikationssystem (1) nach Anspruch 1 oder 2, **dadurch gekennzeichnet, dass** die wenigstens einer Anwesenheitssimulationsvorrichtung (8, 81, 82, 83, 84, 85) wenigstens eine weitere an dem Bauwerk (5) und/oder an dem Außengerät (2) vorgesehene elektronisch steuerbare Einrichtung (81, 82, 83, 84, 85) aufweist.

4. Türkommunikationssystem (1) nach einem der vorangehenden Ansprüche, **dadurch gekennzeichnet, dass** die Authentifizierungsschnittstelle (22, 221) wenigstens einen Fingerabdruckscanner umfasst.

5. Türkommunikationssystem (1) nach einem der vorangehenden Ansprüche, **dadurch gekennzeichnet, dass** das Außengerät (2) von einem Gehäuse (20) umfasst ist, wobei die elektronische Steuereinrichtung (4) in dem Gehäuse (20) angeordnet ist.

6. Türkommunikationssystem (1) nach einem der vorangehenden Ansprüche, **gekennzeichnet durch** wenigstens einen Sensor für eine Anwendung der Gebäudeautomatisierung und/oder wenigstens eine elektronisch ansteuerbare Einrichtung für eine Anwendung der Gebäudeautomatisierung, wobei der wenigstens eine Sensor und/oder die wenigstens eine elektronisch ansteuerbare Einrichtung über wenigstens eine drahtlose Kommunikationsverbindung mit dem Außengerät (2) verbindbar ist.

7. Außengerät (2) für ein Türkommunikationssystem (1), wobei das Außengerät (2) zur ortsfesten Anordnung in einem Außenbereich (51) eines Bauwerks (5) vorgesehen ist, welcher durch eine Tür (9) von einem Innenbereich (52) des Bauwerks (5) abtrennbar ist, und wobei das Außengerät (2) und das folgendes umfasst:
- wenigstens eine Übertragungsschnittstelle zum Herstellen einer drahtlosen Kommunikationsverbindung (7) mit einem Innengerät (3) des Türkommunikationssystems (1);
- ein Signalbetätigungselement (28) zum Auslösen einer Signalfunktion an dem Innengerät (3);
- eine Authentifizierungsschnittstelle (22, 221) zur Authentifizierung einer Person und/oder eines Sicherheitstokens aufweist;
- eine elektronischen Steuereinrichtung (4), die ausgebildet ist, ein Freigabesignal (90) zum Öffnen eines an der Tür (9) angeordneten Funkschlosses (91) zu erzeugen, wenn an der Authentifizierungsschnittstelle (22, 221) eine autorisierte Person und/oder ein autorisierter Sicherheitstoken erfasst wird; und
- einen Bewegungssensor (26) zur Detektion einer Bewegung in dem Außenbereich (51);
**dadurch gekennzeichnet, dass**
die elektronische Steuereinrichtung (4) ausgebildet und eingerichtet ist, die folgenden Schritte auszuführen:
- Erkennen durch eine Steuerlogik (41), dass der Bewegungssensor (26) eine Bewegung detektiert hat;
- Überprüfen durch die Steuerlogik (41), ob innerhalb einer vorbestimmten Zeitspanne nach dem Erkennen, dass der Bewegungssensor (26) die Bewegung detektiert hat,
- der Bewegungssensor (26) eine weitere Bewegung erfasst und/oder
- das Signalbetätigungselement (28) betätigt wird und/oder
- an der Authentifizierungsschnittstelle (22, 221) eine autorisierte Person und/oder ein autorisierter Sicherheitstoken erfasst wird; und
- Erzeugen von Steuersignalen (80) zum Aktivieren wenigstens einer Anwesenheitssimulationsvorrichtung (8, 81, 82, 83, 84, 85), wenn die Überprüfung ergibt, dass innerhalb der vorbestimmten Zeitspanne
- der Bewegungssensor (26) eine weitere Bewegung detektiert hat und
- das Signalbetätigungselement (28) nicht betätigt worden ist und
- an der Authentifizierungsschnittstelle (22, 221) keine autorisierte Person und kein autorisierter Sicherheitstoken erfasst worden ist,
wobei die wenigstens eine Anwesenheitssimulationsvorrichtung (8, 81, 82, 83, 84, 85) wenigstens eine an dem Außengerät (2) vorgesehene elektronisch steuerbare Stimmausgabe (85) umfasst und ausgebildet ist, in einer für eine in dem Außenbereich (51) befindliche Person wahrnehmbaren Weise die Anwesenheit einer Person in dem Innenbereich (52) zu simulieren.

8. Außengerät (2) nach Anspruch 7, **dadurch gekennzeichnet, dass** die elektronische Steuereinrichtung (4) ausgebildet und eingerichtet ist, die folgenden weiteren Schritte auszuführen:
- Überprüfen durch die Steuerlogik (41), ob innerhalb einer vorbestimmten Zeitspanne nach dem Aktivieren der Anwesenheitssimulationsvorrichtung (8, 81, 82, 83, 84, 85)
- der Bewegungssensor (26) eine weitere Bewegung detektiert und/oder
- das Signalbetätigungselement (28) betätigt wird und/oder
- an der Authentifizierungsschnittstelle (22, 221) eine autorisierte Person und/oder ein autorisierter Sicherheitstoken erfasst wird, und
- wenn die Überprüfung ergibt, dass innerhalb der vorbestimmten Zeitspanne
- der Bewegungssensor (26) eine weitere Bewegung detektiert hat und
- das Signalbetätigungselement (28) nicht betätigt worden ist und
- an der Authentifizierungsschnittstelle (22, 221) keine autorisierte Person und kein autorisierter Sicherheitstoken erfasst worden ist, automatisches Aufnehmen wenigstens eines Bildes mittels einer an dem Außengerät (2) angeordneten Kamera (24) und Übertragen des Bildes an das Innengerät (3).

9. Verfahren zum Betrieb eines Türkommunikationssystems (1), wobei das Türkommunikationssystem folgendes umfasst:
- wenigstens ein Außengerät (2), das in einem Außenbereich (51) eines Bauwerks (5) ortsfest angeordnet ist, wobei der Außenbereich (51) durch eine Tür (9) von einem Innenbereich (52) des Bauwerks (5) abtrennbar ist;
- wenigstens ein von dem Außengerät (2) räumlich separates Innengerät (3), das zumindest von dem Innenbereich (52) aus mit dem Außengerät (2) über wenigstens eine drahtlose Kommunikationsverbindung (7) verbindbar ist;
- wenigstens eine Anwesenheitssimulationsvorrichtung (8, 81, 82, 83, 84, 85), die ausgebildet ist, in einer für eine in dem Außenbereich (51) befindliche Person wahrnehmbaren Weise die Anwesenheit einer Person in dem Innenbereich (52) zu simulieren, wobei die wenigstens eine Anwesenheitssimulationsvorrichtung (8, 81, 82, 83, 84, 85) wenigstens eine an dem Außengerät (2) vorgesehene elektronisch steuerbare Stimmausgabe (85) umfasst;
wobei das Verfahren folgendes umfasst:
- bei Bedarf Herstellen der drahtlosen Kommunikationsverbindung (7) für die Kommunikation zwischen einer in dem Außenbereich (51) befindlichen Person und einer in dem Innenbereich (52) befindlichen Person;
- automatisches Öffnen eines an der Tür (9) angeordneten Funkschlosses (91), wenn an einer Authentifizierungsschnittstelle (22, 221) des Außengeräts (2) eine autorisierte Person und/oder ein autorisierter Sicherheitstoken erfasst wird, und
- Auslösen einer Signalfunktion an dem Innengerät (3), wenn ein an dem Außengerät (2) vorgesehenes Signalbetätigungselement (28) betätigt wird,
**gekennzeichnet durch** die folgenden Schritte:
- Erkennen durch eine Steuerlogik (41) einer elektronischen Steuereinrichtung (4), dass ein an dem Außengerät (2) vorgesehener Bewegungssensor (26) eine Bewegung in dem Außenbereich detektiert hat;
- Überprüfen durch die Steuerlogik (41), ob innerhalb einer vorbestimmten Zeitspanne nach dem Erkennen, dass der Bewegungssensor (26) die Bewegung detektiert hat,
- der Bewegungssensor (26) eine weitere Bewegung erfasst und/oder
- das Signalbetätigungselement (28) betätigt wird und/oder
- an der Authentifizierungsschnittstelle (22, 221) eine autorisierte Person und/oder ein autorisierter Sicherheitstoken erfasst wird; und
- Erzeugen von Steuersignalen (80) durch die elektronische Steuereinrichtung (4) und hierdurch Aktivieren der Anwesenheitssimulationsvorrichtung (8, 81, 82, 83, 84, 85), wenn die Überprüfung ergibt, dass innerhalb der vorbestimmten Zeitspanne
- der Bewegungssensor (26) eine weitere Bewegung detektiert hat und
- das Signalbetätigungselement (28) nicht betätigt worden ist und
- an der Authentifizierungsschnittstelle (22, 221) keine autorisierte Person und kein autorisierter Sicherheitstoken erfasst worden ist.

10. Verfahren nach Anspruch 9, **dadurch gekennzeichnet, dass** bei Betätigung des Signalbetätigungselements (28) automatisch mittels einer an dem Außengerät (2) angeordneten Kamera (24) wenigstens ein Bild aufgenommen und an das Innengerät (3) übertragen wird.

11. Verfahren nach Anspruch 9, **gekennzeichnet, durch** die folgenden weiteren Schritte:
- Überprüfen durch die Steuerlogik (41), ob innerhalb einer vorbestimmten Zeitspanne nach dem Aktivieren der Anwesenheitssimulationsvorrichtung (8, 81, 82, 83, 84, 85)
- der Bewegungssensor (26) eine weitere Bewegung detektiert und/oder
- das Signalbetätigungselement (28) betätigt wird und/oder
- an der Authentifizierungsschnittstelle (22, 221) eine autorisierte Person und/oder ein autorisierter Sicherheitstoken erfasst wird, und
- wenn die Überprüfung ergibt, dass innerhalb der vorbestimmten Zeitspanne
- der Bewegungssensor (26) eine weitere Bewegung detektiert hat und
- das Signalbetätigungselement (28) nicht betätigt worden ist und
- an der Authentifizierungsschnittstelle (22, 221) keine autorisierte Person und kein autorisierter Sicherheitstoken erfasst worden ist,
automatisches Aufnehmen wenigstens eines Bildes mittels einer an dem Außengerät (2) angeordneten Kamera (24) und Übertragen des Bildes an das Innengerät (3).

## Claims

1. Door communication system (1) for communication between a person in an external area (51) of a building (5) and a person in an internal area (52) of the building (5), the external area (51) being separable from the internal area (52) by a door (9), having
- an external appliance (2) intended for fixed arrangement in the external area (51) and having the following:
- a signal operating element (28) for triggering a signal function on the internal appliance (3) ;
- an authentication interface (22, 221) for authenticating a person and/or a security token; and
- a motion sensor (26) for detecting a movement in the external area (51),
- at least one internal appliance (3), physically separate from the external appliance (2), that is connectable at least from the internal area (52) to the external appliance (2) via at least one wireless communication connection (7);
- an electronic control device (4), designed and configured to generate a release signal (90) for opening a radio lock (91) arranged on the door (9) when an authorised person and/or an authorised security token is detected on the authentication interface (22, 221);
- at least one presence simulation apparatus (8, 81, 82, 83, 84, 85) designed to simulate the presence of a person in the internal area (52) in a manner perceptible to a person in the external area (51), the at least one presence simulation apparatus (8, 81, 82, 83, 84, 85) comprising at least one electronically controllable voice output (85) provided on the external appliance (2);
**characterized in that**
the electronic control device (4) is designed and configured to perform the following steps:
- identifying, by means of control logic (41), that the motion sensor (26) has detected a movement;
- checking, by means of the control logic (41), whether within a predetermined period of time after the motion sensor (26) is identified as having detected the movement
- the motion sensor (26) detects a further movement and/or
- the signal operating element (28) is operated and/or
- an authorised person and/or an authorised security token is detected on the authentication interface (22, 221); and
- generating control signals (80) and, as a result, activating the presence simulation apparatus (8, 81, 82, 83, 84, 85) if the result of the check is that within the predetermined period of time
- the motion sensor (26) has detected a further movement and
- the signal operating element (28) has not been operated and
- no authorised person and no authorised security token have been detected on the authentication interface (22, 221).

2. Door communication system (1) according to Claim 1, **characterized in that** the electronic control device (4) is designed and configured to perform the following further steps:
- checking, by means of the control logic (41), whether within a predetermined period of time after the presence simulation apparatus (8, 81, 82, 83, 84, 85) is activated
- the motion sensor (26) detects a further movement and/or
- the signal operating element (28) is operated and/or
- an authorised person and/or an authorised security token is detected on the authentication interface (22, 221), and
- if the result of the check is that within the predetermined period of time
- the motion sensor (26) has detected a further movement and
- the signal operating element (28) has not been operated and
- no authorised person and no authorised security token have been detected on the authentication interface (22, 221),
automatically recording at least one image by means of a camera (24) arranged on the external appliance (2) and transmitting the image to the internal appliance (3).

3. Door communication system (1) according to Claim 1 or 2, **characterized in that** the at least one presence simulation apparatus (8, 81, 82, 83, 84, 85) has at least one further electronically controllable device (81, 82, 83, 84, 85) provided on the building (5) and/or on the external appliance (2) .

4. Door communication system (1) according to one of the preceding claims, **characterized in that** the authentication interface (22, 221) comprises at least one fingerprint scanner.

5. Door communication system (1) according to one of the preceding claims, **characterized in that** the external appliance (2) is comprised by a housing (20), wherein the electronic control device (4) is arranged in the housing (20).

6. Door communication system (1) according to one of the preceding claims, **characterized by** at least one sensor for an application of the building automation and/or at least one electronically actuatable device for an application of the building automation, wherein the at least one sensor and/or the at least one electronically actuatable device is connectable to the external appliance (2) via at least one wireless communication connection.

7. External appliance (2) for a door communication system (1), wherein the external appliance (2) is intended for fixed arrangement in an external area (51) of a building (5) that is separable from an internal area (52) of the building (5) by a door (9), and wherein the external appliance (2) and comprises the following:
- at least one transmission interface for setting up a wireless communication connection (7) to an internal appliance (3) of the door communication system (1);
- a signal operating element (28) for triggering a signal function on the internal appliance (3);
- has an authentication interface (22, 221) for authenticating a person and/or a security token;
- an electronic control device (4) designed to generate a release signal (90) for opening a radio lock (91) arranged on the door (9) if an authorised person and/or an authorised security token is detected on the authentication interface (22, 221); and
- a motion sensor (26) for detecting a movement in the external area (51);
**characterized in that**
the electronic control device (4) is designed and configured to perform the following steps:
- identifying, by means of control logic (41), that the motion sensor (26) has detected a movement;
- checking, by means of the control logic (41), whether within a predetermined period of time after the motion sensor (26) is identified as having detected the movement
- the motion sensor (26) detects a further movement and/or
- the signal operating element (28) is operated and/or
- an authorised person and/or an authorised security token is detected on the authentication interface (22, 221); and
- generating control signals (80) for activating at least one presence simulation apparatus (8, 81, 82, 83, 84, 85) if the result of the check is that within the predetermined period of time
- the motion sensor (26) has detected a further movement and
- the signal operating element (28) has not been operated and
- no authorised person and no authorised security token have been detected on the authentication interface (22, 221),
wherein the at least one presence simulation apparatus (8, 81, 82, 83, 84, 85) comprises at least one electronically controllable voice output (85) provided on the external appliance (2) and is designed to simulate the presence of a person in the internal area (52) in a manner perceptible to a person in the external area (51).

8. External appliance (2) according to Claim 7, **characterized in that** the electronic control device (4) is designed and configured to perform the following further steps:
- checking, by means of the control logic (41), whether within a predetermined period of time after the presence simulation apparatus (8, 81, 82, 82, 84, 85) is activated
- the motion sensor (26) detects a further movement and/or
- the signal operating element (28) is operated and/or
- an authorised person and/or an authorised security token is detected on the authentication interface (22, 221), and
- if the result of the check is that within the predetermined period of time
- the motion sensor (26) has detected a further movement and
- the signal operating element (28) has not been operated and
- no authorised person and no authorised security token have been detected on the authentication interface (22, 221),
automatically recording at least one image by means of a camera (24) arranged on the external appliance (2) and transmitting the image to the internal appliance (3).

9. Method for operating a door communication system (1), wherein the door communication system comprises the following:
- at least one external appliance (2) arranged in a fixed fashion in an external area (51) of a building (5), wherein the external area (51) is separable from an internal area (52) of the building (5) by a door (9);
- at least one internal appliance (3), physically separate from the external appliance (2), that is connectable at least from the internal area (52) to the external appliance (2) via at least one wireless communication connection (7);
- at least one presence simulation apparatus (8, 81, 82, 83, 84, 85) designed to simulate the presence of a person in the internal area (52) in a manner perceptible to a person in the external area (51), wherein the at least one presence simulation apparatus (8, 81, 82, 83, 84, 85) comprises at least one electronically controllable voice output (85) provided on the external appliance (2);
wherein the method comprises the following:
- setting up the wireless communication connection (7) for communication between a person in the external area (51) and a person in the internal area (52) as required;
- automatically opening a radio lock (91) arranged on the door (9) if an authorised person and/or an authorised security token is detected on an authentication interface (22, 221) of the external appliance (2), and
- triggering a signal function on the internal appliance (3) if a signal operating element (28) provided on the external appliance (2) is operated,
**characterized by** the following steps:
- identifying, by means of control logic (41) of an electronic control device (4), that a motion sensor (26) provided on the external appliance (2) has detected a movement in the external area;
- checking, by means of the control logic (41), whether within a predetermined period of time after the motion sensor (26) is identified as having detected the movement
- the motion sensor (26) detects a further movement and/or
- the signal operating element (28) is operated and/or
- an authorised person and/or an authorised security token is detected on the authentication interface (22, 221); and
- generating control signals (80) by means of the electronic control device (4) and, as a result, activating the presence simulation apparatus (8, 81, 82, 83, 84, 85) if the result of the check is that within the predetermined period of time
- the motion sensor (26) has detected a further movement and
- the signal operating element (28) has not been operated and
- no authorised person and no authorised security token have been detected on the authentication interface (22, 221).

10. Method according to Claim 9, **characterized in that** operation of the signal operating element (28) results in at least one image automatically being recorded by means of a camera (24) arranged on the external appliance (2) and being transmitted to the internal appliance (3).

11. Method according to Claim 9, **characterized by** the following further steps:
- checking, by means of the control logic (41), whether within a predetermined period of time after the presence simulation apparatus (8, 81, 82, 83, 84, 85) is activated
- the motion sensor (26) detects a further movement and/or
- the signal operating element (28) is operated and/or
- an authorised person and/or an authorised security token is detected on the authentication interface (22, 221), and
- if the result of the check is that within the predetermined period of time
- the motion sensor (26) has detected a further movement and
- the signal operating element (28) has not been operated and
- no authorised person and no authorised security token have been detected on the authentication interface (22, 221),
automatically recording at least one image by means of a camera (24) arranged on the external appliance (2) and transmitting the image to the internal appliance (3).

## Revendications

1. Système de communication de porte (1) pour la communication entre une personne qui se trouve dans une zone extérieure (51) d'un ouvrage bâti (5) et une personne qui se trouve dans une zone intérieure (52) de l'ouvrage bâti (5), la zone extérieure (51) pouvant être séparée de la zone intérieure (52) par une porte (9), comprenant
- un appareil externe (2) qui est conçu pour être disposé en position fixe dans la zone extérieure (51) et qui possède les éléments suivants :
- un élément d'actionnement de signal (28) destiné à déclencher une fonction de signalisation au niveau de l'appareil interne (3) ;
- une interface d'authentification (22, 221) destinée à authentifier une personne et/ou un jeton de sécurité ; et
- un détecteur de mouvement (26) destiné à la détection d'un mouvement dans la zone extérieure (51)
- au moins un appareil interne (3) séparé dans l'espace de l'appareil externe (2), lequel peut être connecté à l'appareil externe (2) au moins depuis la zone intérieure (52) par le biais d'au moins une liaison de communication sans fil (7) ;
- un dispositif de commande électronique (4) qui est configuré et conçu pour générer un signal de libération (90) en vue d'ouvrir une serrure radioélectrique (91) disposée sur la porte (9) lorsqu'une personne autorisée et/ou un jeton de sécurité autorisé est détecté au niveau de l'interface d'authentification (22, 221) ;
- au moins un arrangement de simulation de présence (8, 81, 82, 83, 84, 85) qui est configuré pour simuler la présence d'une personne dans la zone intérieure (52) d'une manière perceptible par une personne qui se trouve dans la zone extérieure (51), l'au moins un arrangement de simulation de présence (8, 81, 82, 83, 84, 85) comportant au moins une sortie vocale (85) pouvant être commandée électroniquement et disposée sur l'appareil externe (2) ;
**caractérisé en ce que**
le dispositif de commande électronique (4) est configuré et conçu pour exécuter les étapes suivantes :
- reconnaissance par une logique de commande (41) que le détecteur de mouvement (26) a détecté un mouvement ;
- contrôle par la logique de commande (41) si, dans un intervalle de temps prédéterminé après la reconnaissance du mouvement par le détecteur de mouvement (26),
- le détecteur de mouvement (26) détecte un mouvement supplémentaire et/ou
- l'élément d'actionnement de signal (28) est actionné et/ou
- une personne autorisée et/ou un jeton de sécurité autorisé est détecté au niveau de l'interface d'authentification (22, 221) ; et
- génération de signaux de commande (80) et ainsi activation de l'arrangement de simulation de présence (8, 81, 82, 83, 84, 85) lorsque le résultat du contrôle indique que, dans l'intervalle de temps prédéterminé
- le détecteur de mouvement (26) a détecté un mouvement supplémentaire et
- l'élément d'actionnement de signal (28) n'a pas été actionné et
- aucune personne autorisée et aucun jeton de sécurité autorisé n'ont été détectés au niveau de l'interface d'authentification (22, 221).

2. Système de communication de porte (1) selon la revendication 1, **caractérisé en ce que** le dispositif de commande électronique (4) est configuré et conçu pour exécuter les étapes supplémentaires suivantes :
- contrôle par la logique de commande (41) si, au sein d'un intervalle de temps prédéterminé après l'activation de l'arrangement de simulation de présence (8, 81, 82, 83, 84, 85)
- le détecteur de mouvement (26) détecte un mouvement supplémentaire et/ou
- l'élément d'actionnement de signal (28) est actionné et/ou
- une personne autorisée et/ou un jeton de sécurité autorisé est détecté au niveau de l'interface d'authentification (22, 221) et
- lorsque le résultat du contrôle indique que, dans l'intervalle de temps prédéterminé
- le détecteur de mouvement (26) a détecté un mouvement supplémentaire et
- l'élément d'actionnement de signal (28) n'a pas été actionné et
- aucune personne autorisée et aucun jeton de sécurité autorisé n'ont été détectés au niveau de l'interface d'authentification (22, 221), enregistrement automatique d'au moins une image au moyen d'une caméra (24) disposée au niveau de l'appareil externe (2) et transmission de l'image à l'appareil interne (3).

3. Système de communication de porte (1) selon la revendication 1 ou 2, **caractérisé en ce que** l'au moins un arrangement de simulation de présence (8, 81, 82, 83, 84, 85) possède au moins un dispositif (81, 82, 83, 84, 85) pouvant être commandé électroniquement supplémentaire, présent au niveau de l'ouvrage bâti (5) et/ou au niveau de l'appareil externe (2).

4. Système de communication de porte (1) selon l'une des revendications précédentes, **caractérisé en ce que** l'interface d'authentification (22, 221) comporte au moins un lecteur d'empreinte digitale.

5. Système de communication de porte (1) selon l'une des revendications précédentes, **caractérisé en ce que** l'appareil externe (2) est entouré par un boîtier (20), le dispositif de commande électronique (4) étant disposé dans le boîtier (20) .

6. Système de communication de porte (1) selon l'une des revendications précédentes, **caractérisé par** au moins un capteur pour une utilisation de l'automatisation de bâtiment et/ou au moins un dispositif pouvant être commandé électroniquement pour une utilisation de l'automatisation de bâtiment, l'au moins un capteur et/ou l'au moins un dispositif pouvant être commandé électroniquement pouvant être connecté à l'appareil externe (2) par le biais d'au moins une liaison de communication sans fil.

7. Appareil externe (2) pour un système de communication de porte (1), l'appareil externe (2) étant conçu pour être disposé en position fixe dans la zone extérieure (51) d'un ouvrage bâti (5), laquelle peut être séparée par une porte (9) d'une zone intérieure (52) de l'ouvrage bâti (5), et l'appareil externe (2) comprenant les éléments suivants :
- au moins une interface de transmission destinée à établir une liaison de communication sans fil (7) avec un appareil interne (3) du système de communication de porte (1) ;
- un élément d'actionnement de signal (28) destiné à déclencher une fonction de signalisation au niveau de l'appareil interne (3) ;
- une interface d'authentification (22, 221) destinée à authentifier une personne et/ou un jeton de sécurité;
- un dispositif de commande électronique (4) qui est configuré et conçu pour générer un signal de libération (90) en vue d'ouvrir une serrure radioélectrique (91) disposée sur la porte (9) lorsqu'une personne autorisée et/ou un jeton de sécurité autorisé est détecté au niveau de l'interface d'authentification (22, 221) ; et
- un détecteur de mouvement (26) destiné à la détection d'un mouvement dans la zone extérieure (51) ; **caractérisé en ce que**
le dispositif de commande électronique (4) est configuré et conçu pour exécuter les étapes suivantes :
- reconnaissance par une logique de commande (41) que le détecteur de mouvement (26) a détecté un mouvement ;
- contrôle par la logique de commande (41) si, dans un intervalle de temps prédéterminé après la reconnaissance du mouvement par le détecteur de mouvement (26),
- le détecteur de mouvement (26) détecte un mouvement supplémentaire et/ou
- l'élément d'actionnement de signal (28) est actionné et/ou
- une personne autorisée et/ou un jeton de sécurité autorisé est détecté au niveau de l'interface d'authentification (22, 221) ; et
- génération de signaux de commande (80) en vue d'activer au moins un arrangement de simulation de présence (8, 81, 82, 83, 84, 85) lorsque le résultat du contrôle indique que, dans l'intervalle de temps prédéterminé
- le détecteur de mouvement (26) a détecté un mouvement supplémentaire et
- l'élément d'actionnement de signal (28) n'a pas été actionné et
- aucune personne autorisée et aucun jeton de sécurité autorisé n'ont été détectés au niveau de l'interface d'authentification (22, 221),
l'au moins un arrangement de simulation de présence (8, 81, 82, 83, 84, 85) comportant au moins une sortie vocale (85) pouvant être commandée électroniquement disposée au niveau de l'appareil externe (2) et étant configuré pour simuler la présence d'une personne dans la zone intérieure (52) d'une manière perceptible par une personne qui se trouve dans la zone extérieure (51).

8. Appareil externe (2) selon la revendication 7, **caractérisé en ce que** le dispositif de commande électronique (4) est configuré et conçu pour exécuter les étapes supplémentaires suivantes :
- contrôle par la logique de commande (41) si, au sein d'un intervalle de temps prédéterminé après l'activation de l'arrangement de simulation de présence (8, 81, 82, 83, 84, 85)
- le détecteur de mouvement (26) détecte un mouvement supplémentaire et/ou
- l'élément d'actionnement de signal (28) est actionné et/ou
- une personne autorisée et/ou un jeton de sécurité autorisé est détecté au niveau de l'interface d'authentification (22, 221) et
- lorsque le résultat du contrôle indique que, dans l'intervalle de temps prédéterminé
- le détecteur de mouvement (26) a détecté un mouvement supplémentaire et
- l'élément d'actionnement de signal (28) n'a pas été actionné et
- aucune personne autorisée et aucun jeton de sécurité autorisé n'ont été détectés au niveau de l'interface d'authentification (22, 221), enregistrement automatique d'au moins une image au moyen d'une caméra (24) disposée au niveau de l'appareil externe (2) et transmission de l'image à l'appareil interne (3).

9. Procédé pour faire fonctionner un système de communication de porte (1), le système de communication de porte comprenant les éléments suivants :
- au moins un appareil externe (2) qui est disposé en position fixe dans une zone extérieure (51) d'un ouvrage bâti (5), la zone extérieure (51) pouvant être séparée par une porte (9) d'une zone intérieure (52) de l'ouvrage bâti (5) ;
- au moins un appareil interne (3) séparé dans l'espace de l'appareil externe (2), lequel peut être connecté à l'appareil externe (2) au moins depuis la zone intérieure (52) par le biais d'au moins une liaison de communication sans fil (7) ;
- au moins un arrangement de simulation de présence (8, 81, 82, 83, 84, 85) qui est configuré pour simuler la présence d'une personne dans la zone intérieure (52) d'une manière perceptible par une personne qui se trouve dans la zone extérieure (51), l'au moins un arrangement de simulation de présence (8, 81, 82, 83, 84, 85) comportant au moins une sortie vocale (85) pouvant être commandée électroniquement et disposée sur l'appareil externe (2) ;
le procédé comprenant ce qui suit :
- au besoin, établissement de la liaison de communication sans fil (7) pour la communication entre une personne qui se trouve dans la zone extérieure (51) et une personne qui se trouve dans la zone intérieure (52) ;
- ouverture automatique d'une serrure radioélectrique (91) disposée sur la porte (9) lorsqu'une personne autorisée et/ou un jeton de sécurité autorisé est détecté au niveau d'une interface d'authentification (22, 221) de l'appareil externe (2), et
- déclenchement d'une fonction de signalisation au niveau de l'appareil interne (3) lorsqu'un élément d'actionnement de signal (28) présent au niveau de l'appareil externe (2) est actionné,
**caractérisé par** les étapes suivantes :
- reconnaissance par une logique de commande (41) d'un dispositif de commande électronique (4) qu'un détecteur de mouvement (26) présent au niveau de l'appareil externe (2) a détecté un mouvement dans la zone extérieure ;
- contrôle par la logique de commande (41) si, dans un intervalle de temps prédéterminé après la reconnaissance du mouvement par le détecteur de mouvement (26),
- le détecteur de mouvement (26) détecte un mouvement supplémentaire et/ou
- l'élément d'actionnement de signal (28) est actionné et/ou
- une personne autorisée et/ou un jeton de sécurité autorisé est détecté au niveau de l'interface d'authentification (22, 221) ; et
- génération de signaux de commande (80) par le dispositif de commande électronique (4) et ainsi activation de l'arrangement de simulation de présence (8, 81, 82, 83, 84, 85) lorsque le résultat du contrôle indique que, dans l'intervalle de temps prédéterminé
- le détecteur de mouvement (26) a détecté un mouvement supplémentaire et
- l'élément d'actionnement de signal (28) n'a pas été actionné et
- aucune personne autorisée et aucun jeton de sécurité autorisé n'ont été détectés au niveau de l'interface d'authentification (22, 221).

10. Procédé selon la revendication 9, **caractérisé en ce que** lors de l'actionnement de l'élément d'actionnement de signal (28), au moins une image est automatiquement enregistrée au moyen d'une caméra (24) disposée au niveau de l'appareil externe (2) et transmise à l'appareil interne (3).

11. Procédé selon la revendication 9, **caractérisé par** les étapes supplémentaires suivantes :
- contrôle par la logique de commande (41) si, au sein d'un intervalle de temps prédéterminé après l'activation de l'arrangement de simulation de présence (8, 81, 82, 83, 84, 85)
- le détecteur de mouvement (26) détecte un mouvement supplémentaire et/ou
- l'élément d'actionnement de signal (28) est actionné et/ou
- une personne autorisée et/ou un jeton de sécurité autorisé est détecté au niveau de l'interface d'authentification (22, 221) et
- lorsque le résultat du contrôle indique que, dans l'intervalle de temps prédéterminé
- le détecteur de mouvement (26) a détecté un mouvement supplémentaire et
- l'élément d'actionnement de signal (28) n'a pas été actionné et
- aucune personne autorisée et aucun jeton de sécurité autorisé n'ont été détectés au niveau de l'interface d'authentification (22, 221),
enregistrement automatique d'au moins une image au moyen d'une caméra (24) disposée au niveau de l'appareil externe (2) et transmission de l'image à l'appareil interne (3).
